# EUROPEAN PATENT SPECIFICATION

(11) **EP 2 755 731 B1**
(45) Date of publication and mention of the grant of the patent: **19.01.2022**
(21) Application number: 12832522.2
(22) Date of filing: 13.09.2012
(51) Int. Cl.: B01D 3/00, C02F 1/04, C02F 1/06, B01D 1/16, B01D 3/06, C02F 1/16

(54) **SYSTEM AND METHOD FOR WATER TREATMENT**
SYSTEM UND VERFAHREN ZUR WASSERAUFBEREITUNG
SYSTÈME ET PROCÉDÉ DE TRAITEMENT DE L'EAU

(30) Priority: 14.09.2011 US 201161573900 P; 14.09.2011 US 201161573957 P; 14.09.2011 US 201161573958 P; 14.09.2011 US 201161573956 P; 14.09.2011 US 201161573955 P; 14.09.2011 US 201161573954 P; 14.09.2011 US 201161573953 P; 14.09.2011 US 201161573952 P
(43) Date of publication of application: 23.07.2014
(73) Proprietor: Aquasource Technologies Corporation, North Huntingdon, Pennsylvania 15642 (US)
(72) Inventor: DIGHE, Shyam, V., North Huntingdon, Pennsylvania 15642 (US)
(74) Representative: Grünecker Patent- und Rechtsanwälte PartG mbB
(86) International application number: PCT/US2012/055187
(87) International publication number: WO 2013/040228

(56) References cited:
- WO-A1-2010/133840
- WO-A1-2012/085860
- WO-A2-02/50215
- WO-A2-2006/123258
- WO-A2-2012/127250
- JP-A- S5 559 879
- US-A- 3 119 752
- US-A- 3 396 086
- US-A- 3 433 717
- US-A- 3 586 090
- US-A- 3 912 578
- US-A- 3 951 753
- US-A- 4 035 243
- US-A- 5 637 127
- US-A1- 2001 045 106
- US-B1- 6 187 206

## Description

### FIELD OF THE INVENTION

The present invention is generally directed toward a system for the treatment of waste water and a method of treating waste water, and, more particularly, toward the treatment of water containing large amounts of dissolved solids as may result, for example, from use of the water as a fracking fluid used in drilling gas wells. However, the embodiment proposed herein may be used in any situation where impurities to be removed from water exist.

### BACKGROUND OF THE INVENTION

Ensuring a supply of potable water has been a frequent concern in many locations. Further concerns arise about the environmental impact of the disposal of contaminated water.

Conventional water treatment techniques for such purposes as, for example, municipal water treatment and/or obtaining potable water from sea water are known and are successful in many instances. However, some current activities show those techniques to have limited cost effectiveness.

For example, mining with water used to fracture rock or shale formations to recover natural gas (*e.g.,* in the shale regions in the United States and western Canada including, but not limited to, Pennsylvania, Maryland, New York, Texas, Oklahoma, West Virginia and Ohio) requires a very large amount of water input and a significant amount of return (flowback) water that contains a great deal of contaminants and impurities. In order for this flowback water to be used in an environmentally responsible manner, it needs to be relatively free of contaminants/impurities. Water used, for example, in natural gas well drilling and production may contain organic materials, volatile and semi-volatile compounds, oils, metals, salts, etc. that have made economical treatment of the water to make it potable or reusable, or even readily and safely disposable, more difficult. It is desirable to remove or reduce the amount of such contaminants/impurities in the water to be re-used, and also to remove or reduce the amount of such contaminants/impurities in water that is disposed of.

US 3,951,753 A discloses a method of converting an aqueous scale-forming liquid containing alkaline scale-forming compounds, typified by calcium and magnesium bicarbonates, and non-alkaline scale-forming compounds, typified by calcium sulfate and compounds of silica and iron, which comprises indirectly preheating said aqueous liquid; adding steam to the preheated liquid and condensing the steam therein, whereby the preheated liquid is further heated; as a result of said further heating, firmly decomposing alkaline scale-forming compounds, forming carbon dioxide and a precipitate of alkaline scale compounds and non-alkaline scale compounds; expelling said carbon dioxide from the further heating liquid; separating said precipitate of alkaline and non-alkaline scale compounds from the further heated liquid, thereby forming a hot mother liquor; flash vaporizing the hot mother liquor, forming water vapor and cooled mother liquor; compressing the water vapor and employing compressed vapor as steam for said further heating; and evaporating said cooled mother liquor from distillate and aqueous liquid residuum.

US 3,433,717 A relates to an apparatus for evaporating and distilling liquids, comprising: means for preheating incoming liquid including a multiple stage flash evaporator and heat exchanger, said multiple stage flash evaporator preheating a first portion of the incoming liquid, each stage of said flash evaporator including a flash chamber having a condensing section, means for supplying said first portion of the incoming liquid to the condensing sections of said flash evaporator, a vapor compression evaporator for vaporizing the preheated liquid and leaving concentrate, a heat exchanger for preheating the remaining portion of the incoming liquid, means for delivering substantially all of the preheated liquid from the flash evaporator condensing sections and the heat exchanger to said vapor compression evaporator, said vapor compression evaporator including a compressor for compressing the vapor and an evaporator chamber, condensing means in said evaporator chamber for condensing the compressed vapor, said vapor compression evaporator being adapted to condense said vapor thereby producing distillate, said vapor compression evaporator being constructed to provide the major portion of evaporation of the apparatus, means connecting the vapor compression evaporator and the heat exchanger to convey the distillate to the heat exchanger in heat exchange relation with said remaining incoming liquid to cool the distillate and preheat said remaining portion of the incoming liquid, and means connecting the vapor compression evaporator and the flash evaporator to convey all of the concentrate from said vapor compression evaporator to the flash chambers of said flash evaporator, said flash evaporator flashing a small portion of said concentrate to produce additional distillate and with the flashing vapors condensing in said condensing sections, thereby preheating said first portion of said incoming liquid.

US 3,586,090 A provides a method for evaporating brines, such as sea water, in a system in which the brine is transferred to successive evaporating zones wherein blocking of the transfer lines is avoided. In one specific embodiment, the brine is first treated under atmospheric pressure to evaporate a portion of the liquid therein and to precipitate a substantial amount of solid. The brine is then transferred at its atmospheric boiling point to a reduced pressure flashing zone to evaporate additional liquid while precipitating additional dissolved solid.

WO 2012/127250 A2 discloses a method of generating steam for use in an industrial process, comprising the steps of pressurizing a working fluid liquid comprising water to a first pressure of at least 50 bar; heating the working fluid liquid to a temperature substantially equal to the saturation temperature of the working fluid liquid at the first pressure; and flash evaporating the working fluid liquid to generate steam; wherein the pressurized working fluid liquid is heated in step (b) by direct heating in a solar radiation absorption device.

JP S55 59879 A relates to a multiple effect evaporated type water manufacturer. Sea water is pumped by a pump and preheated in a second and third preheater after being passed through a condenser and alkali scale preventer, and then heated by water vapor in a high temperature heater to form great quantities of CaSO₄ crystal nuclei.

US 3,912,578 A relates to a frontward flow and backward flow method of and apparatus for purifying waste fluid containing waste water and corrosive salts with high temperature steam from a continuous coke quenching apparatus to produce substantially pure salt-free condensate.

WO 2012/085860 A1 discloses a steam delivery system for biomass processing comprising at least one compressor for pressurizing low temperature water to pressures of at least 5 bar, a series of heat exchangers supplied by turbine steam from an electrical power generation plant for pre-heating pressurized low temperature water to temperatures of at least 150o C, and a means for delivering the pre-heated, pressurized water as steam having pressure of at least 5 bar to any one or more of a hydrothermai pretreatment reactor, a distillation unit, an evaporator, or a dryer.

US 4,035,243 A relates to a method and apparatus for high volume distillation of impure liquid comprising evaporating the impure liquid in an evaporator to form a vapor at a temperature above the freezing point and at or below the boiling point of said liquid at atmospheric pressure and at a pressure corresponding to the evaporation temperature under saturated conditions; compressing said vapor adiabatically; admixing in a mixing chamber the compressed vapor under substantially isobaric conditions directly with hot gases having a temperature sufficiently greater than the temperature of the compressed vapor that the resulting vapor-gas mixture temperature is greater than the temperature of the compressed vapor prior to the mixing; passing the vapor-gas mixture through an expansion engine to motivate the engine and to produce shaft energy, whereby the vapor-gas mixture adiabatically expands and cools; compressing the expanded vapor-gas mixture adiabatically in an independently powered compressor to a predetermined pressure corresponding to a predetermined temperature differential between the compressed vapor-gas mixture and the impure liquid; cooling the vapor-gas mixture in heat transfer relation with the impure liquid whereby the vapor at least partially condenses, transferring sufficient heat to the impure liquid for evaporating the liquid and to form the aforementioned vapor; and collecting the condensed vapor.

US 3,119,752 A relates to a method of recovering fresh water from sea water containing salts tending to cause scale formation at elevated temperatures above 170 F. which comprises treating the sea water by mixing an amount of non-precipitate forming acid with said sea water sufficient to reduce substantially its total amount of alkalinity expressed as equivalent calcium carbonate content to an amount ranging up to about 30 p.p.m. wherein dissolved CO₂ is formed by chemical reaction as determined by titration with a standard acid to a methyl orange end-point at substantially ambient conditions prior to removal of CO₂, then removing substantially the CO₂ formed, whereby to inhibit the scale-forming tendency and the corrosive action of said treated sea water at elevated distillation temperatures ranging up to about 225 F. and higher, and subjecting said treated sea water to distillation.

US 3,396,086 A discloses an apparatus for the distillation of a liquid comprising an evaporator for the production of vapours from the liquid, a vapour washing chamber having a vapour inlet connected to a vapour outlet from the evaporator and a vapour outlet, a means to inject washing liquid into the chamber arranged to direct ya spray of the washing liquid at vapour passing between the inlet and the outlet, and a means for directly removing liquid from the chamber.

WO 2006/123258 A2 discloses a method for using a plasma generating device in a water treatment apparatus or system, comprising the steps of providing one or more plasma generators within a chamber that is capable of being at least partially filled with water, providing a power supply and air or gas supply to the one or more plasma generators to generate one or more plasma torches, where the one or more plasma torches are positioned to contact the water in the chamber, collecting the steam generated from the one or more plasma torches, and condensing the steam to produce water.

WO 02/50215 A2 discloses an energy-optimized waste treatment apparatus, comprising a plasma waste treatment section and a water desalination section, said plasma waste treatment section producing in output inert slag, a synthesis gas and heat, said synthesis gas and said heat being used to power said water desalination section.

US 2001/045106 A1 discloses a method of converting a halogenated compound into a glass, the method comprising the steps of incinerating a halogenated compound to separate the halogen from the carbon in the presence of water; allowing the free halogen species to hydrolyze with the water to form an acid species; neutralizing the acid species with an alkaline earth metal to form a slurry of halogenated salts; removing any gas produced; mixing the slurry of halogenated salts with a glass forming raw material; heating the halogenated salt slurry and the glass forming raw material to form a viscous glass product; and cooling the viscous glass product so as to form glass containing a halogenated.

US 6,187,206 B1 relates to thermal reactor systems employing one or more preferably submerged energy sources, and to processes for treating wastewater using such thermal reactor systems.

US5,637,127 A relates to a method of processing waste materials to form molten glass comprising the steps of providing a waste material-glassformer mixture of waste material and glass forming material; injecting said mixture into a tuyere; providing a plasma torch capable of producing a plasma plume within the tuyere to produce melting and oxidation of the mixture resulting in vitrification of the mixture while the mixture is flowing within the tuyere and molten glass exiting the tuyere; and solidifying the vitrified mixture.

The present invention is directed toward overcoming one or more of the above-identified problems.

### SUMMARY OF THE INVENTION

The present invention provides system for treating waste water comprising:
a pump (11) for receiving waste water at a first pressure and a first temperature and for pressurizing the received waste water to a second pressure greater than the first pressure, the waste water comprising dissolved solids, volatile organic compounds and other components generally and collectively called impurities;
first and second preheaters (12, 12a) for receiving the pressurized waste water from the pump (11) and for preheating the pressurized waste water in successive stages to a second temperature greater than the first temperature to produce water and pressurized/preheated waste water, each of the first and second preheaters configured to produce distilled water without boiling of the waste water across heat transfer surfaces;
a condenser (13) for receiving the pressurized/preheated waste water and for further heating the pressurized/preheated waste water to a third temperature greater than the second temperature to produce a pressurized/further heated waste water without boiling of the waste water across heat transfer surfaces;
a heater (14) for receiving the pressurized/further heated waste water and for still further heating the pressurized/further heated waste water to a fourth temperature greater than the third temperature to produce pressurized/heated waste water without boiling of the waste water across heat transfer surfaces; and
an evaporator (15) for being operated at a third pressure less than the second pressure, for removing dissolved solids from the pressurized/heated waste water by evaporation caused by depressurization of the waste water to produce steam and brine water, wherein the brine water has a total dissolved solids content greater than a total dissolved solids content of the received waste water,
wherein the system for treating waste water is configured such that steam from the evaporator is superheated to a fifth temperature greater than the fourth temperature and configured such that said steam can be used as a heat source by at least one of the heater (14), condenser (13) and first and/or second preheaters (12, 12a) without boiling of the waste water across heat transfer surfaces;
wherein the brine water has a total dissolved solids content greater than a total dissolved solids content of the received waste water,
a crystallizer comprising a vitrifier for crystallizing the brine water to produce a solid mass of waste product and steam, wherein the solid mass includes a vitrified glass of the salts in the brine water,
wherein the crystallizer comprises a plasma crystallizer and includes a plasma torch for vaporizing the water from the brine water and for producing the solid mass of waste product and steam,
   the system further comprising a stripper for initially receiving the waste water and for removing volatile organic compounds from the waste water prior to the waste water being pressurized by the pump, wherein the system is configured such that the removed volatile organic compounds are used as a heat source by the plasma torch to crystallize the brine water.

The present invention also provides a method of treating waste water comprising the steps of:
(a) receiving waste water at a first pressure and a first temperature in a pump (11), the waste water comprising dissolved solids, volatile organic compounds and other components generally and collectively called impurities;
(b) pressurizing the received waste water to a second pressure greater than the first pressure;
(c) preheating the pressurized waste water to a second temperature greater than the first temperature, wherein said preheating step is performed by first and second preheaters (12, 12a) in successive stages to produce pressurized/preheated waste water, each of the first and second preheaters (12, 12a) producing distilled water without boiling of the waste water across heat transfer surfaces;
(d) heating the pressurized/preheated waste water in a condenser (13) to a third temperature greater than the second temperature to produce a pressurized/heated waste water without boiling of the waste water across heat transfer surfaces;
(e) further heating the pressurized/heated waste water to a fourth temperature greater than the third temperature to produce pressurized/further heated waste water without boiling of the waste water across heat transfer surfaces;
(f) removing, by evaporation caused by depressurization of the waste water, dissolved solids from the pressurized/further heated waste water by an evaporator (15) operated at a third pressure less than the second pressure to produce steam and brine water, wherein the brine water has a total dissolved solids content greater than a total dissolved solids content of the received waste water, wherein steam from the evaporator (15) is superheated to a fifth temperature greater than the fourth temperature and is used as a heat source in at least one of steps (c) - by the second preheater (12), (d) and (e) without boiling of the waste water across heat transfer surfaces.;
(g) crystallizing and vitrifying the brine water to produce a solid mass of waste product and steam by a crystallizer and vitrifier, wherein steam produced by step (g) is mixed with steam produced by step (f) and superheated to the fifth temperature, wherein the mixed and superheated steam is used as a heat source in at least one of steps (c) - by the second preheater (12, 12a), (d) and (e) without boiling of the waste water across heat transfer surfaces, and wherein the solid mass includes a vitrified glass of the salts in the brine water;
wherein step (g) uses a plasma torch to crystallize the brine water, and
wherein the method further comprises the steps of:
(b') prior to step (b), removing the volatile organic compounds from the received waste water, wherein the removed volatile organic compounds are used as a heat source by the plasma torch to crystallize the brine water;
wherein the second pressure is approximately 827.4-1241.1 kPa (120- 180 psia), and the third pressure is approximately 27.6-41.4 kPa (4-6 psia); or
   wherein the fourth temperature is approximately 141.1-221.1°C (286- 430°F), and wherein the firth temperature is approximately 204.4-315.6°C (400-600°F).

Further explanations and examples of various aspects of the present invention are presented in the following disclosure.

It is an object of the present invention to provide a system and method for the economic and environmental treatment of waste water.

Various other objects, aspects and advantages of the present invention can be obtained from a study of the specification, the drawings, and the appended claims.

### BRIEF DESCRIPTION OF THE DRAWINGS

Further possible embodiments are shown in the drawings. The present invention is explained in the following in greater detail as an example, with reference to exemplary embodiments depicted in drawings. In the drawings:
Figs. 1, 2 and 3 are schematic flow diagrams of particular examples of stages of a treatment system in accordance with the present invention;
Fig. 4 is a schematic flow diagram of an exemplary thermal reactor for use in a water treatment system in conjunction with elements such as those shown in Figs. 1-3 in accordance with the present invention.

### DETAILED DESCRIPTION OF THE INVENTION

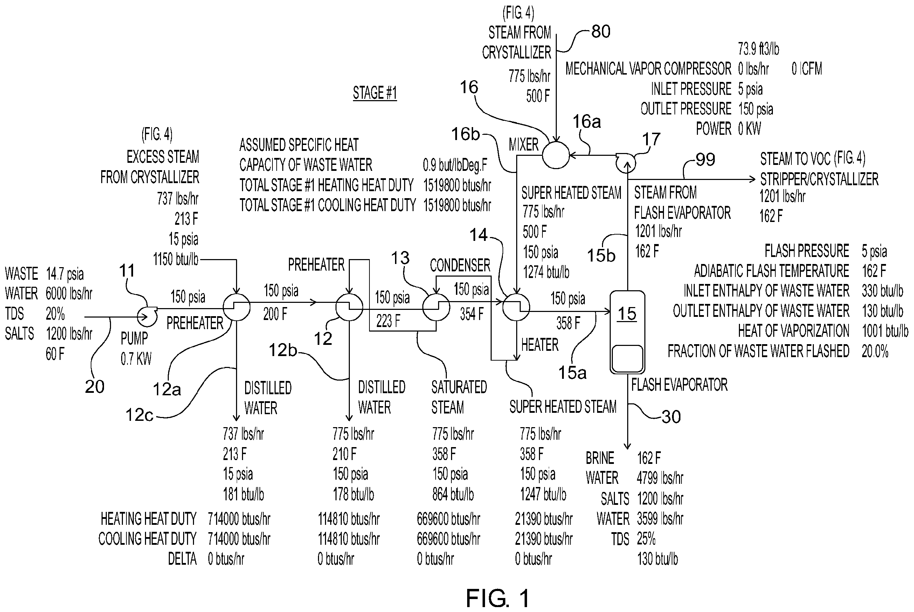

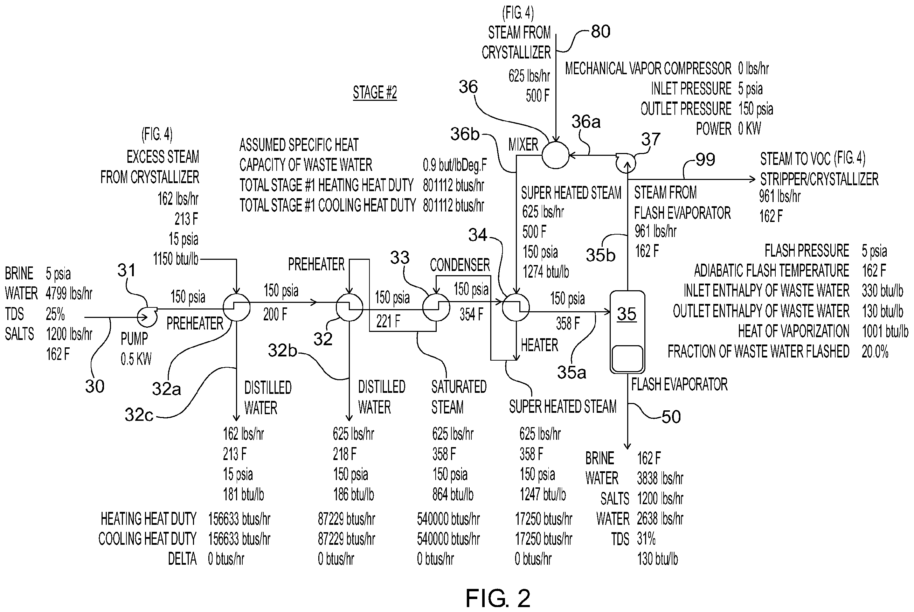

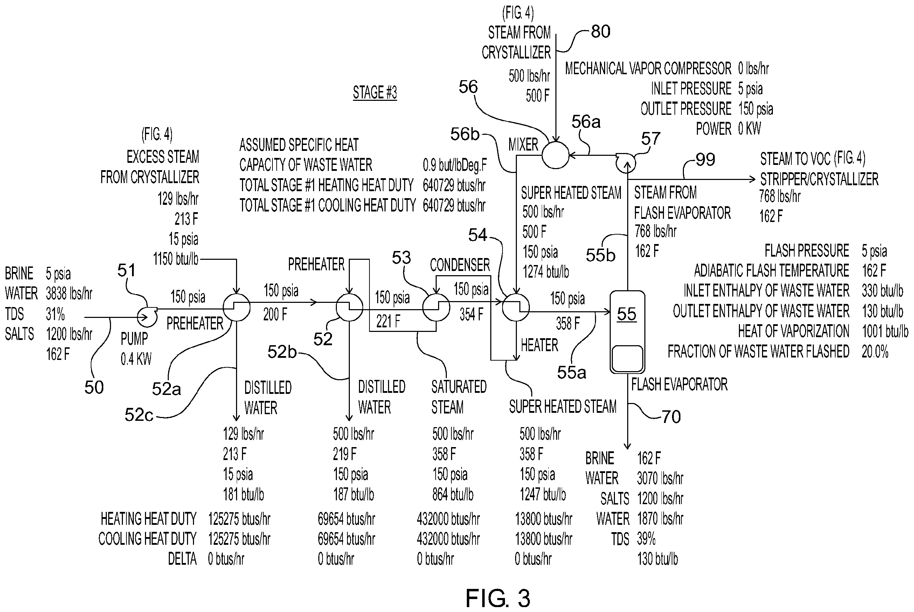

Figs. 1, 2 and 3 will be individually discussed, but first their general relation to each other in an exemplary multi-stage system will be described. Fig. 1 shows Stage #1. This first stage takes in waste water at an inlet 20, processes it and produces first stage brine water at an outlet 30 of the first stage. The first stage brine water from the outlet 30 is input to the second stage shown in Fig. 2 (Stage #2) for additional processing, and a resulting second stage brine water is produced as an output at outlet 50. Similarly, the brine water from outlet 50 of the second stage is supplied as an input to the third stage shown in Fig. 3 (Stage #3) that has additional processing, resulting in a third stage output of brine water at an outlet 70.

It will be seen and appreciated by one skilled in the art how the successive stages of Figs. 1, 2 and 3 increase the concentration of salts in the brine water (*e.g.*, Total Dissolved Solids - "TDS"). It will also be appreciated how the number of stages is a variable that can be chosen according to various factors including, but not limited to, the salts content of the original waste water and the desired salt content after concentration. In general, a system in accordance with these exemplary embodiments may include any one or more stages such as are shown, for example, in Figs. 1-3. The examples presented herein are merely illustrative of systems and methods that may be chosen not merely for good technical performance but also for reasons relating to economic factors, such as, for example, initial capital cost and operating cost, as well as convenience factors, such as, for example, space requirements and portability. While three stages are shown and described herein, one skilled in the art will appreciate that any number of stages may be utilized depending on the particular application.

Each of the Figs. 1-4, merely by way of further example and without limitation, are described in this specification, and include legends, including numerical values (all of which are merely representative approximations and are not necessarily exact technical values and/or calculations). Further, these legends are not necessarily the only suitable values that represent the nature and characteristics of materials as applied to, affected by, and resulting from the operations of the exemplary system(s). Not all such legends will be repeated in this text, although all form a part of this disclosure and are believed understandable to persons of ordinary skill in water treatment and thermal processes. As appreciated by one skilled in the art, such data are sometimes referred to as heat and material balances. It is specifically to be understood and will be appreciated by one skilled in the art that the various values indicated in the legends may have a tolerance of ± 20%, as they are representative approximations and not exact technical values.

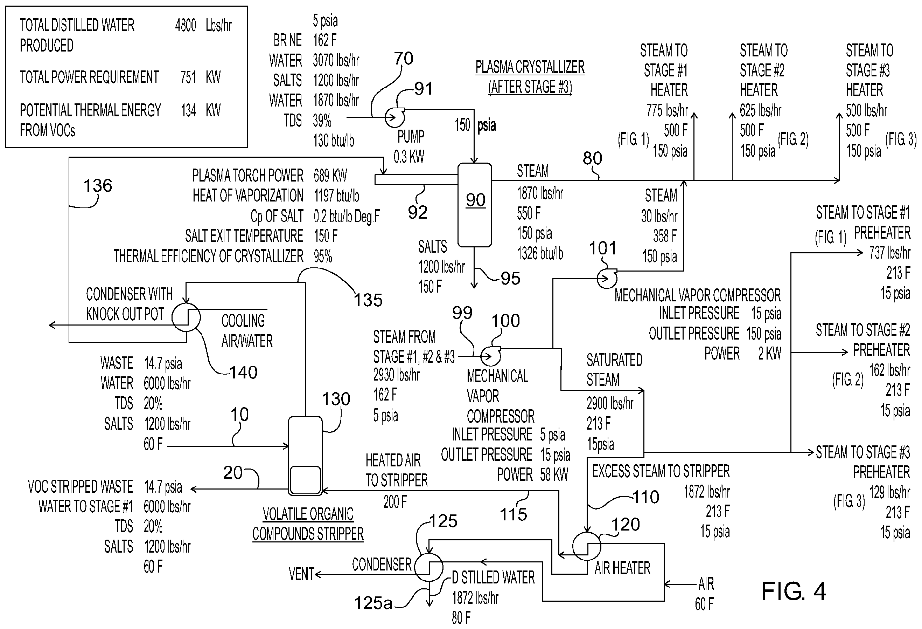

Referring to Fig. 1, which shows Stage #1, the waste water progresses from the input 20 to the output 30 successively through a pump 11, preheaters 12a and 12, a condenser 13, an additional heater 14, and a flash evaporator 15. In the preheater 12a, the heating medium is the excess steam available from a crystallizer 90 (*see* Fig. 4), while for the preheater 12, the heating medium is the hot water available from the condenser 13.

The pump 11 elevates the waste water pressure from approximately 101, 4 kPa (14.7 psia) (1 atm) to approximately 1034, 2 kPa (150 psia). The level of pressurization of waste water in all stages is such that there is no boiling of the waste water inside and across the heat exchanger surfaces of all heat exchangers used in this system. This is done to prevent formation of deposits (scales, fouling etc.) on the heat exchanger surfaces. The temperature is also raised by the successive preheaters 12a and 12, the condenser 13 and the heater 14, so the input waste water to the flash evaporator 15 at inlet 15a is at 1034, 2 kPa (150 psia) and 181,1°C (358°F).

The elevation in temperature is the effect of steam from one steam output 80 of the crystallizer subsystem 90 of Fig. 4. That steam is mixed in a mixer 16 of Fig. 1 with part of the steam from the flash evaporator 15 at line 15b that goes through a compressor 17 before it reaches the mixer 16 at input 16a. Some of the steam from the evaporator 15 at line 15b is also fed to the stripper 130 (*see* Fig. 4). The output 16b of the mixer 16 is a superheated steam at approximately 260°C (500°F) and 1034, 2 kPa (150 psia) which, following its use as a heating fluid in the heater 14, continues to the condenser 13 and the preheater 12 until it exits the preheater 12 at outlet 12b as distilled water. Additionally, as shown in Fig. 1, the output of preheater 12a at outlet 12c is also distilled water. Under certain operating conditions, the steam addition from the crystallizer 90 may be negative, *i.e.,* steam is sent as excess to the crystallizer 90 for other uses (*e.g.,* as a heat source for the stripper 130).

The Stage #1 output 30 has the volume of waste water reduced from the input 10 with the salts more concentrated to 25% TDS, which is increased from the initial approximately 20% TDS in the exemplary waste water at the input 20.

Stage #2 of the system as shown in Fig. 2 has elements substantially like those of Stage #1 in Fig. 1, but with some different operating parameters as shown in the legends in Fig. 2. Referring to Fig. 2, which shows Stage #2, the waste water progresses from the input 30 to the output 50 successively through a pump 31, preheaters 32a and 32, a condenser 33, an additional heater 34, and a flash evaporator 35. In the preheater 32a, the heating medium is the excess steam available from a crystallizer 90 (*see* Fig. 4), while for the preheater 32, the heating medium is the hot water available from the condenser 33.

The pump 31 elevates the waste water pressure from approximately 34,5 kPa (5 psia) at its input to approximately 1034,2 kPa (150 psia). The temperature is also raised by the successive preheaters 32a and 32, the condenser 33 and the heater 34, so the input waste water to the flash evaporator 35 at inlet 35a is at 1034,2 kPa (150 psia) and 181,1°C (358°F).

The elevation in temperature is the effect of steam from one steam output 80 of the crystallizer subsystem 90 of Fig. 4. That steam is mixed in a mixer 36 of Fig. 2 with part of the steam from the flash evaporator 35 at line 35b that goes through a compressor 37 before it reaches the mixer 36 at input 36a. Some of the steam from the evaporator 35 at line 35b is also fed to the stripper 130 (*see* Fig. 4). The output 36b of the mixer 36 is a superheated steam at approximately 260°C (500°F) and 1034,2 kPa (150 psia) which, following its use as a heating fluid in the heater 34, continues to the condenser 33 and the preheater 32 until it exits the preheater 32 at outlet 32b as distilled water. Additionally, as shown in Fig. 2, the output of preheater 32a at outlet 32c is also distilled water. Under certain operating conditions, the steam addition from the crystallizer 90 may be negative, *i.e.,* steam is sent as excess to the crystallizer 90 for other uses (*e.g.,* as a heat source for the stripper 130).

The Stage #2 output 50 has the volume of waste water reduced from the input 30 with the salts more concentrated to 31% TDS, which is increased from the initial approximately 25% TDS in the exemplary brine water at the input 30.

Similarly, Stage #3 of Fig. 3 has elements substantially like those of Fig. 2, but with still some differences in operating parameters as shown in the legends in Fig. 3. Referring to Fig. 3, which shows Stage #3, the waste water progresses from the input 50 to the output 70 successively through a pump 51, preheaters 52a and 52, a condenser 53, an additional heater 54, and a flash evaporator 55. In the preheater 52a, the heating medium is the excess steam available from a crystallizer 90 (*see* Fig. 4), while for the preheater 52, the heating medium is the hot water available from the condenser 53.

The pump 51 elevates the waste water pressure from approximately 34,5 kPa (5 psia) at its input to approximately 1034,2 kPa (150 psia). The temperature is also raised by the successive preheaters 52a and 52, the condenser 53 and the heater 54, so the input waste water to the flash evaporator 55 at inlet 55a is at 1034,2 kPa (150 psia) and 181,1°C (358°F).

The elevation in temperature is the effect of steam from one steam output 80 of the crystallizer subsystem 90 of Fig. 4. That steam is mixed in a mixer 56 of Fig. 3 with part of the steam from the flash evaporator 55 at line 55b that goes through a compressor 57 before it reaches the mixer 56 at input 56a. Some of the steam from the evaporator 55 at line 55b is also fed to the stripper 130 (*see* Fig. 4). The output 56b of the mixer 56 is a superheated steam at approximately 260°C (500°F) and 1034,2 kPa (150 psia) which, following its use as a heating fluid in the heater 54, continues to the condenser 53 and the preheater 52 until it exits the preheater 52 at outlet 52b as distilled water. Additionally, as shown in Fig. 2, the output of preheater 52a at outlet 52c is also distilled water. Under certain operating conditions, the steam addition from the crystallizer 90 may be negative, *i.e.,* steam is sent as excess to the crystallizer 90 for other uses (*e.g.,* as a heat source for the stripper 130).

The Stage #3 output 70 has the volume of waste water reduced from the input 50 with the salts more concentrated to 39% TDS, which is increased from the initial approximately 31% TDS in the exemplary brine water at the input 50.

The exemplary system includes multiple (three) concentration stages (Figs. 1-3) that are substantially alike in the combination of equipment used. However, other exemplary systems with multiple concentration stages may have individual stages of more viewed combinations of equipment

The level of pressurization of waste water in all stages is such that there is no boiling (nucleate or other type) of the waste water inside and across the heat exchanger surfaces of the condensers, heaters and preheaters of each stage. This prevents the formation of deposits (scales, fouling etc.) on the heat exchanger surfaces and reduces the requirement for cleaning of the heat exchangers. This results in the reduction of the operating cost.

Fig. 4 represents an exemplary embodiment of applying the output brine water (line 70) of the Stage #3 treatment (Fig. 3) to a plasma crystallizer 90. The plasma crystallizer 90 is an example of a known pyrolytic reactor that can be used to finish separation of water from salts dissolved therein. One skilled in the art will appreciate, however, that other thermal reactors may also be used without departing from the spirit and scope of the present invention. The example of a plasma reactor, which can be consistent with known plasma gasification/vitrification reactors, operated with one or more plasma torches 92, as is well-known in published literature, is believed to provide opportunity for a favorable cost-benefit ratio.

In general, for multistage operation, the plasma crystallizer 90 (or other reactor) is utilized after the final concentration stage when the output brine water has been concentrated to a desired level, as described in the above example. It can also be suitable to have a multistage system not only for salts concentration (as in Figs. 1-3), but also a separation subsystem with a reactor (*e.g.*, plasma crystallizer 90) after any individual one of the early concentration stages (*e.g.,* after either, or both, of Stages #1 and #2). However, it is generally more cost effective to have a single separation subsystem after the last of a determined number of concentration stages for the desired separation.

In general, any thermal reactor may be used to separate the salts and the water. A reactor operated to produce disposable salts (referred to herein as a "crystallizer") is generally suitable. Where the salts have toxicity, it may be desirable to operate the reactor in a manner so they are vitrified or made into glass. Accordingly, any reference to a crystallizer herein can also include a vitrifier.

As shown in Fig. 4, the crystallizer 90 has a salts output at an outlet 95 that is generally equivalent to the total salts content of the original waste water. The water output of the total system is recovered as clean distilled water from the preheaters 12a, 12, 32a, 32, 52a, 52 of the respective stages of Figs. 1-3, and/or may be recovered directly from excess steam exiting the crystallizer system 90 at line 80 and/or the excess steam exiting the respective flash evaporators 15, 35, 55 at line 99 (the excess steam is condensed to form distilled water). The pressure of the steam in line 99 is first increased by a compressor 100 from approximately 34,5 kPa to 103,4 kPa (5 psia to 15 psia) at line 110. This excess steam 110 is then utilized to heat air in the heater 120 and then condensed in condenser 125 to produce distilled water at line 125a. The condenser 125 can be cooled by air or by plant cooling tower water.

Fig. 4 shows the brine water 70 entering the crystallizer 90 via a pump 91 that raises the pressure to 1034,2 kPa (150 psia). Fig 4 also shows how steam from the crystallizer 90 can be redirected back to the respective earlier Stages of Figs. 1-3. The steam output from the crystallizer 90 at line 80 may be provided back to the various Stages #1, #2 and #3 and used for heating by the respective heaters and condensers therein. Heated air at line 115 from the heater 120 is used in the stripper 130 which is utilized to remove, for example, volatile organic compounds ("VOCs") from the waste water. Some excess steam may also be used for other purposes, *e.g.,* to preheat the waste water in a preheater or a condenser.

Before treatment in the Stages shown in Figs. 1-3, the incoming waste water 10 can be, for example, sent to the stripper 130 where steam 115 is used to remove VOCs from the waste water 10. Fig. 4 shows steam from the concentration Stages #1, #2 and #3 at an input 99 of the compressor 100 that is elevated to a temperature of 100,6°C (213°F) for use in the stripper 130. The excess steam can be used directly in the stripper 130, as shown in Fig. 4, or used to heat air in a separate heat exchanger where the heated air is then used in the stripper to remove the VOCs. Additionally, the steam from the compressor 100 can be applied to another compressor 101 to increase its temperature and pressure to that of the steam in line 80, and then combined with the steam in line 80.

The stripped wastewater is sent as feed to the input 20 to Stage #1 of Fig. 1. The VOCs which are removed from the waste water 10 exit the stripper 130 through a conduit 135 which is sent to a condenser 140, in which the VOCs are condensed to form liquid by using, for example, cooling water or air. The VOCs exit the condenser 140 at outlet 136 which connects to the plasma crystallizer 90. The VOCs are fed in front of the plasma torch 92 (*e.g.,* along with brine water 70 from the pump 91) such that they intensely mix with the high temperature gases exiting from the plasma torch 92. The plasma torch 92 is operated using appropriate gas (*e.g.,* air, oxygen, hydrogen, etc.) that will aid in, or result in, the complete destruction of the VOCs. The VOCs are substantially converted to carbon dioxide and steam. The heat generated by this conversion of VOCs to carbon dioxide and steam is utilized in the plasma crystallizer 90, along with heat inputted through the plasma torch 92, to vaporize the water from the brine water 70. This reduces the amount of heat and the corresponding amount of electricity utilized in the plasma crystallizer 90, thus increasing its cost effectiveness.

The steam exiting the plasma crystallizer 90 can be periodically vented to the atmosphere (not shown) to keep the levels of non-condensable gases low enough such that they do not degrade the performance of the heat exchangers used in the inventive system and process.

It is therefore seen that systems and processes in accordance with the present invention can make use of known and available components (such as, for example, flash evaporators for concentration of salts and plasma (or other) gasifier reactors for crystallization (or vitrification) of the salts) in particular innovative ways with insight as to both the capital cost and the operating cost. A need for such cost effective water treatment has been heightened by practices such as, for example, the use of large amounts of water in natural gas drilling. However, the present invention may be used in any situation where impurities to be removed exist.

In general summary, but without limitation, an embodiment of the present invention can be characterized in the following ways, for example: A system, and a corresponding method, in which waste water is supplied to one or more stages of equipment including a pump for pressurizing the water (*e.g.,* to at least about 10 times atmospheric pressure), a heater that heats the pressurized waste water well above normal boiling temperature, a flash evaporator, or other device, that receives the heated, pressurized water and results in fluid evaporation and concentration of solids that were in the waste water. In for example, instances in which the waste (brine) water with concentrated solids cannot be otherwise readily and safely disposed of, a thermal or pyrolytic reactor is provided to crystallize or otherwise yield a form of the solids that can be readily and safely disposed of. In one form, such a reactor may also be applied as a heater for the original incoming waste water. Also, or alternatively, such a reactor may be used to form a vitrified glass of the salts output of any water treatment system that produces a brine water.

Furthermore, the examples of Figs. 1-4 show how use can be made of flash evaporators operated at a low downstream pressure (e.g., 34, 5 kPa (5 psia) or only about one-third of 1 atm) along with compressors, as well as with a mixer for steam from a flash evaporator (after compression in a compressor) added with steam returned from a reactor. All of which is believed to contribute significantly to reduced operating costs which can be very beneficial, even though initial capital costs may be increased.

Furthermore, the examples provided herein show how use can be made of flash evaporators operated at reduced downstream pressure (*e.g.*, 172,4 kPa (25 psia) compared to 1034,2 kPa (150 psia) upstream pressure) along with an expander (*e.g.*, turbine), for energy recovery from the steam output of a crystallizer. All of which is believed to contribute significantly to reduced operating costs which can be very beneficial, even though initial capital costs may be increased.

## Claims

1. A system for treating waste water comprising:
a pump (11) for receiving waste water at a first pressure and a first temperature and for pressurizing the received waste water to a second pressure greater than the first pressure, the waste water comprising dissolved solids, volatile organic compounds and other components generally and collectively called impurities;
first and second preheaters (12, 12a) for receiving the pressurized waste water from the pump (11) and for preheating the pressurized waste water in successive stages to a second temperature greater than the first temperature to produce water and pressurized/preheated waste water, each of the first and second preheaters configured to produce distilled water without boiling of the waste water across heat transfer surfaces;
a condenser (13) for receiving the pressurized/preheated waste water and for further heating the pressurized/preheated waste water to a third temperature greater than the second temperature to produce a pressurized/further heated waste water without boiling of the waste water across heat transfer surfaces;
a heater (14) for receiving the pressurized/further heated waste water and for still further heating the pressurized/further heated waste water to a fourth temperature greater than the third temperature to produce pressurized/heated waste water without boiling of the waste water across heat transfer surfaces; and
an evaporator (15) for being operated at a third pressure less than the second pressure, for removing dissolved solids from the pressurized/heated waste water by evaporation caused by depressurization of the waste water to produce steam and brine water, wherein the brine water has a total dissolved solids content greater than a total dissolved solids content of the received waste water,
wherein the system for treating waste water is configured such that steam from the evaporator is superheated to a fifth temperature greater than the fourth temperature and configured such that said steam can be used as a heat source by at least one of the heater (14), condenser (13) and first and/or second preheaters (12, 12a) without boiling of the waste water across heat transfer surfaces;
wherein the brine water has a total dissolved solids content greater than a total dissolved solids content of the received waste water,
a crystallizer comprising a vitrifier for crystallizing the brine water to produce a solid mass of waste product and steam, wherein the solid mass includes a vitrified glass of the salts in the brine water,
wherein the crystallizer comprises a plasma crystallizer and includes a plasma torch for vaporizing the water from the brine water and for producing the solid mass of waste product and steam,
the system further comprising a stripper for initially receiving the waste water and for removing volatile organic compounds from the waste water prior to the waste water being pressurized by the pump, wherein the system is configured such that the removed volatile organic compounds are used as a heat source by the plasma torch to crystallize the brine water.

2. The system of claim 1, wherein the pump, first and second preheaters, condenser, heater and evaporator comprise a stage, and wherein the system comprises multiple stages with the brine water output by one stage used as the received waste water of a next stage.

3. The system of claim 1, wherein the system is configured such that steam from the crystallizer is mixed with steam from the evaporator and superheated to the fifth temperature, wherein the mixed and superheated steam is used as a heat source by at least one of the heater, condenser and second preheater.

4. The system of claim 1, wherein the system is configured such that the steam produced by the evaporator is used as a heat source by the stripper.

5. The system of claim 1, wherein the system is configured such that the steam produced by the evaporator is used as a heat source by the first preheater.

6. The system of claim 1, wherein the pump (11), first and second preheaters (12, 12a), condenser (13), heater (14) and evaporator (15) comprise a stage, and wherein the system comprises multiple stages operating in parallel with each receiving a portion of the waste water.

7. The system of claim 1, wherein the pump (11), first and second preheaters (12, 12a), condenser (13), heater (14) and evaporator (15) comprise a stage, wherein the system comprises multiple stages with the brine water output by one stage used as the received waste water of a next stage, and wherein the system is configured such that the received waste water at stages subsequent to a first stage is at a third pressure less than the first pressure.

8. A method of treating waste water comprising the steps of:
(a) receiving waste water at a first pressure and a first temperature in a pump (11), the waste water comprising dissolved solids, volatile organic compounds and other components generally and collectively called impurities;
(b) pressurizing the received waste water to a second pressure greater than the first pressure;
(c) preheating the pressurized waste water to a second temperature greater than the first temperature, wherein said preheating step is performed by first and second preheaters (12, 12a) in successive stages to produce pressurized/preheated waste water, each of the first and second preheaters (12, 12a) producing distilled water without boiling of the waste water across heat transfer surfaces;
(d) heating the pressurized/preheated waste water in a condenser (13) to a third temperature greater than the second temperature to produce a pressurized/heated waste water without boiling of the waste water across heat transfer surfaces;
(e) further heating the pressurized/heated waste water to a fourth temperature greater than the third temperature to produce pressurized/further heated waste water without boiling of the waste water across heat transfer surfaces;
(f) removing, by evaporation caused by depressurization of the waste water, dissolved solids from the pressurized/further heated waste water by an evaporator (15) operated at a third pressure less than the second pressure to produce steam and brine water, wherein the brine water has a total dissolved solids content greater than a total dissolved solids content of the received waste water, wherein steam from the evaporator (15) is superheated to a fifth temperature greater than the fourth temperature and is used as a heat source in at least one of steps (c) - by the second preheater (12), (d) and (e) without boiling of the waste water across heat transfer surfaces.;
(g) crystallizing and vitrifying the brine water to produce a solid mass of waste product and steam by a crystallizer and vitrifier, wherein steam produced by step (g) is mixed with steam produced by step (f) and superheated to the fifth temperature, wherein the mixed and superheated steam is used as a heat source in at least one of steps (c) - by the second preheater (12, 12a), (d) and (e) without boiling of the waste water across heat transfer surfaces, and wherein the solid mass includes a vitrified glass of the salts in the brine water;
wherein step (g) uses a plasma torch to crystallize the brine water, and
wherein the method further comprises the steps of:
(b') prior to step (b), removing the volatile organic compounds from the received waste water, wherein the removed volatile organic compounds are used as a heat source by the plasma torch to crystallize the brine water;
wherein the second pressure is approximately 827.4-1241.1 kPa (120- 180 psia), and the third pressure is approximately 27.6-41.4 kPa (4-6 psia); or
wherein the fourth temperature is approximately 141.1-221.1°C (286- 430°F), and wherein the firth temperature is approximately 204.4-315.6°C (400-600°F).

9. The method of claim 8, wherein steps (a)-(f) comprise a stage, and wherein the method is performed in multiple stages with the brine water output by step (f) in one stage used as the received waste water in step (a) of a next stage.

10. The method of claim 9, wherein the brine water output in step (f) of each stage has a total dissolved solids content that is higher than that of a previous stage.

11. The method of claim 8, where the steam produced by step (f) is used as a heat source in step (b').

12. The method of claim 8, wherein the steam produced by step (f) is used as a heat source in step (c) - by the first preheater (12, 12a).

13. The method of claim 8, wherein steps (a)-(f) comprise a stage, and wherein the method is performed in multiple stages operating in parallel with each stage receiving a portion of the waste water.

14. The method of claim 8, wherein the brine water output in step (f) of each stage is combined and supplied to a crystallizer which crystallizes the combined brine water to produce a solid mass of waste product and steam.

15. The method of claim 8, wherein steps (a)-(f) comprise a stage, and wherein the method is performed in multiple stages with the brine water output by step (f) in one stage used as the received waste water in step (a) of a next stage, and wherein the received waste water at step (a) in stages subsequent to a first stage is at a third pressure less than the first pressure.

## Patentansprüche

1. System zum Behandeln von Abwasser, umfassend:
eine Pumpe (11) zum Aufnehmen von Abwasser bei einem ersten Druck und einer ersten Temperatur und zum Unterdrucksetzen des aufgenommenen Abwassers auf einen zweiten Druck, der höher als der erste Druck ist, wobei das Abwasser gelöste Feststoffe, flüchtige organische Verbindungen und andere Komponenten umfasst, die allgemein und zusammenfassend als Verunreinigungen bezeichnet werden;
erste und zweite Vorerhitzer (12, 12a) zum Aufnehmen des unter Druck stehenden Abwassers von der Pumpe (11) und zum Vorerhitzen des unter Druck stehenden Abwassers in aufeinanderfolgenden Stufen auf eine zweite Temperatur, die höher als die erste Temperatur ist, um Wasser und unter Druck stehendes/vorerhitztes Abwasser zu erzeugen, wobei jeder der ersten und zweiten Vorerhitzer so konfiguriert ist, dass er destilliertes Wasser erzeugt, ohne dass das Abwasser auf Wärmeübertragungsoberflächen siedet;
einen Kondensator (13) zum Aufnehmen des unter Druck stehenden/vorerhitzten Abwassers und zum weiteren Erhitzen des unter Druck stehenden/vorerhitzten Abwassers auf eine dritte Temperatur, die höher als die zweite Temperatur ist, um ein unter Druck stehendes/weiter erhitztes Abwasser zu erzeugen, ohne dass das Abwasser auf Wärmeübertragungsoberflächen siedet;
einen Erhitzer (14) zum Aufnehmen des unter Druck stehenden/weiter erhitzten Abwassers und zum noch weiteren Erhitzen des unter Druck stehenden/weiter erhitzten Abwassers auf eine vierte Temperatur, die höher als die dritte Temperatur ist, um unter Druck stehendes/erhitztes Abwasser zu erzeugen, ohne dass das Abwasser auf Wärmeübertragungsoberflächen siedet; und
einen Verdampfer (15) zum Betriebenwerden bei einem dritten Druck, der geringer als der zweite Druck ist, zum Entfernen gelöster Feststoffe aus dem unter Druck stehenden/erhitzten Abwasser durch Verdampfung, die durch Druckverringerung des Abwassers verursacht wird, um Dampf und Sole zu erzeugen, wobei die Sole einen Gesamtgehalt an gelösten Feststoffen aufweist, der höher ist als ein Gesamtgehalt an gelösten Feststoffen des aufgenommenen Abwassers,
wobei das System zum Behandeln von Abwasser so konfiguriert ist, dass Dampf aus dem Verdampfer auf eine fünfte Temperatur, die höher als die vierte Temperatur ist, überhitzt wird und so konfiguriert ist, dass der Dampf als Wärmequelle von mindestens einem aus dem Erhitzer (14), dem Kondensator (13) und dem ersten und/oder zweiten Vorerhitzer (12, 12a) verwendet werden kann, ohne dass das Abwasser auf Wärmeübertragungsoberflächen siedet;
wobei die Sole einen Gesamtgehalt an gelösten Feststoffen aufweist, der höher ist als ein Gesamtgehalt an gelösten Feststoffen des aufgenommenen Abwassers,
einen Kristallisator, der einen Verglaser zum Kristallisieren der Sole umfasst, um eine feste Masse aus Abfallprodukt und Dampf zu erzeugen, wobei die feste Masse ein verglastes Glas aus den Salzen in der Sole einschließt,
wobei der Kristallisator einen Plasmakristallisator umfasst und einen Plasmabrenner zum Verdampfen des Wassers aus der Sole und zum Erzeugen der festen Masse aus Abfallprodukt und Dampf einschließt,
wobei das System ferner einen Stripper zum anfänglichen Aufnehmen des Abwassers und zum Entfernen flüchtiger organischer Verbindungen aus dem Abwasser, bevor das Abwasser durch die Pumpe unter Druck gesetzt wird, umfasst, wobei das System so konfiguriert ist, dass die entfernten flüchtigen organischen Verbindungen durch den Plasmabrenner als Wärmequelle verwendet werden, um die Sole zu kristallisieren.

2. System nach Anspruch 1, wobei die Pumpe, der erste und zweite Vorerhitzer, der Kondensator, der Erhitzer und der Verdampfer eine Stufe umfassen, und wobei das System mehrere Stufen umfasst, wobei der Soleausstoß durch eine Stufe als das aufgenommene Abwasser einer nächsten Stufe verwendet wird.

3. System nach Anspruch 1, wobei das System so konfiguriert ist, dass Dampf aus dem Kristallisator mit Dampf aus dem Verdampfer gemischt und auf die fünfte Temperatur überhitzt wird, wobei der gemischte und überhitzte Dampf als Wärmequelle durch mindestens einen aus dem Erhitzer, dem Kondensator und dem zweiten Vorerhitzer verwendet wird.

4. System nach Anspruch 1, wobei das System so konfiguriert ist, dass der vom Verdampfer erzeugte Dampf vom Stripper als Wärmequelle verwendet wird.

5. System nach Anspruch 1, wobei das System so konfiguriert ist, dass der vom Verdampfer erzeugte Dampf vom ersten Vorerhitzer als Wärmequelle verwendet wird.

6. System nach Anspruch 1, wobei die Pumpe (11), der erste und zweite Vorerhitzer (12, 12a), der Kondensator (13), der Erhitzer (14) und der Verdampfer (15) eine Stufe umfassen, und wobei das System mehrere Stufen umfasst, die parallel arbeiten, wobei jede einen Anteil des Abwassers aufnimmt.

7. System nach Anspruch 1, wobei die Pumpe (11), der erste und zweite Vorerhitzer (12, 12a), der Kondensator (13), der Erhitzer (14) und der Verdampfer (15) eine Stufe umfassen, wobei das System mehrere Stufen umfasst, wobei der Soleausstoß durch eine Stufe als das aufgenommene Abwasser einer nächsten Stufe verwendet wird, und wobei das System so konfiguriert ist, dass sich das aufgenommene Abwasser in Stufen nach einer ersten Stufe auf einem dritten Druck befindet, der geringer als der erste Druck ist.

8. Verfahren zum Behandeln von Abwasser, umfassend die Schritte:
(a) Aufnehmen von Abwasser bei einem ersten Druck und einer ersten Temperatur in einer Pumpe (11), wobei das Abwasser gelöste Feststoffe, flüchtige organische Verbindungen und andere Komponenten umfasst, die allgemein und zusammenfassend als Verunreinigungen bezeichnet werden;
(b) Unterdrucksetzen des aufgenommenen Abwassers auf einen zweiten Druck, der höher als der erste Druck ist;
(c) Vorerhitzen des unter Druck stehenden Abwassers auf eine zweite Temperatur, die höher als die erste Temperatur ist, wobei der Vorerhitzungsschritt durch erste und zweite Vorerhitzer (12, 12a) in aufeinanderfolgenden Stufen durchgeführt wird, um unter Druck stehendes/vorerhitztes Abwasser zu erzeugen, wobei jeder der ersten und zweiten Vorerhitzer (12, 12a) destilliertes Wasser erzeugt, ohne dass das Abwasser über Wärmeübertragungsoberflächen siedet;
(d) Erhitzen des unter Druck stehenden/vorerhitzten Abwassers in einem Kondensator (13) auf eine dritte Temperatur, die höher als die zweite Temperatur ist, um ein unter Druck stehendes/erhitztes Abwasser zu erzeugen, ohne dass das Abwasser über Wärmeübertragungsoberflächen siedet;
(e) weiteres Erhitzen des unter Druck stehenden/erhitzten Abwassers auf eine vierte Temperatur, die höher als die dritte Temperatur ist, um unter Druck stehendes/weiter erhitztes Abwasser zu erzeugen, ohne dass das Abwasser über Wärmeübertragungsoberflächen siedet;
(f) Entfernen von gelösten Feststoffen aus dem unter Druck stehenden/weiter erhitzten Abwasser durch Verdampfung, die durch Druckverringerung des Abwassers verursacht wird, durch einen Verdampfer (15), der bei einem dritten Druck, der geringer als der zweite Druck ist, betrieben wird, um Dampf und Sole zu erzeugen, wobei die Sole einen Gesamtgehalt an gelösten Feststoffen aufweist, der höher ist als ein Gesamtgehalt an gelösten Feststoffen des aufgenommenen Abwassers, wobei Dampf aus dem Verdampfer (15) auf eine fünfte Temperatur, die höher als die vierte Temperatur ist, überhitzt wird und als Wärmequelle in mindestens einem der Schritte (c) - durch den zweiten Vorerhitzer (12), (d) und (e) verwendet wird, ohne dass das Abwassers über Wärmeübertragungsoberflächen siedet;
(g) Kristallisieren und Verglasen der Sole, um durch einen Kristallisator und Verglaser eine feste Masse aus Abfallprodukt und Dampf herzustellen, wobei in Schritt (g) erzeugter Dampf mit in Schritt (f) erzeugtem Dampf gemischt und auf die fünfte Temperatur überhitzt wird, wobei der gemischte und überhitzte Dampf in mindestens einem der Schritte (c) - durch den zweiten Vorerhitzer (12, 12a), (d) und (e) als Wärmequelle verwendet wird, ohne dass das Abwassers über Wärmeübertragungsoberflächen siedet, und wobei die feste Masse ein verglastes Glas der Salze in der Sole einschließt;
wobei Schritt (g) einen Plasmabrenner verwendet, um die Sole zu kristallisieren, und wobei das Verfahren ferner die Schritte umfasst:
(b') Entfernen der flüchtigen organischen Verbindungen aus dem aufgenommenen Abwasser vor Schritt (b), wobei die entfernten flüchtigen organischen Verbindungen vom Plasmabrenner als Wärmequelle verwendet werden, um die Sole zu kristallisieren;
wobei der zweite Druck ungefähr 827,4 - 1241,1 kPa (120 - 180 psia) beträgt und der dritte Druck ungefähr 27,6 - 41,4 kPa (4 - 6 psia) beträgt; oder
wobei die vierte Temperatur ungefähr 141,1 - 221,1 °C (286 - 430 °F) beträgt und
wobei die fünfte Temperatur ungefähr 204,4 - 315,6 °C (400 - 600 °F) beträgt.

9. Verfahren nach Anspruch 8, wobei die Schritte (a) - (f) eine Stufe umfassen, und wobei das Verfahren in mehreren Stufen durchgeführt wird, wobei der Soleausstoß durch Schritt (f) in einer Stufe in Schritt (a) einer nächsten Stufe als das aufgenommene Abwasser verwendet wird.

10. Verfahren nach Anspruch 9, wobei der Soleausstoß in Schritt (f) jeder Stufe einen Gesamtgehalt an gelösten Feststoffen aufweist, der höher ist als der einer vorherigen Stufe.

11. Verfahren nach Anspruch 8, wobei der durch Schritt (f) erzeugte Dampf als Wärmequelle in Schritt (b') verwendet wird.

12. Verfahren nach Anspruch 8, wobei der durch Schritt (f) erzeugte Dampf als Wärmequelle in Schritt (c) - durch den ersten Vorerhitzer (12, 12a) verwendet wird.

13. Verfahren nach Anspruch 8, wobei die Schritte (a) - (f) eine Stufe umfassen, und wobei das Verfahren in mehreren Stufen durchgeführt wird, die parallel arbeiten, wobei jede Stufe einen Anteil des Abwassers aufnimmt.

14. Verfahren nach Anspruch 8, wobei der Soleausstoß in Schritt (f) jeder Stufe zusammengeführt und einem Kristallisator zugeführt wird, der die zusammengeführte Sole kristallisiert, um eine feste Masse aus Abfallprodukt und Dampf zu erzeugen.

15. Verfahren nach Anspruch 8, wobei die Schritte (a) - (f) eine Stufe umfassen, und wobei das Verfahren in mehreren Stufen durchgeführt wird, wobei der Soleausstoß durch Schritt (f) in einer Stufe in Schritt (a) einer nächsten Stufe als das aufgenommene Abwasser verwendet wird und wobei sich das aufgenommene Abwasser in Schritt (a) in Stufen nach einer ersten Stufe auf einem dritten Druck befindet, der geringer als der erste Druck ist.

## Revendications

1. Système de traitement d'eaux usées comprenant :
une pompe (11) pour recevoir des eaux usées à une première pression et une première température et pour pressuriser les eaux usées reçues jusqu'à une deuxième pression supérieure à la première pression, les eaux usées comprenant des solides dissous, des composés organiques volatils et d'autres composants appelés de manière générale et collective impuretés ;
des premier et second dispositifs de préchauffage (12, 12a) pour recevoir les eaux usées pressurisées en provenance de la pompe (11) et pour préchauffer les eaux usées pressurisées dans des étages successifs jusqu'à une deuxième température supérieure à la première température pour produire de l'eau et des eaux usées pressurisées/préchauffées, chacun des premier et second dispositifs de préchauffage étant configuré pour produire de l'eau distillée sans faire bouillir les eaux usées à travers des surfaces de transfert thermique ;
un condenseur (13) pour recevoir les eaux usées pressurisées/préchauffées et pour chauffer davantage les eaux usées pressurisées/préchauffées jusqu'à une troisième température supérieure à la deuxième température pour produire des eaux usées pressurisées/davantage chauffées sans faire bouillir les eaux usées à travers des surfaces de transfert thermique ;
un dispositif de chauffage (14) pour recevoir les eaux usées pressurisées/davantage chauffées et pour chauffer encore davantage les eaux usées pressurisées/davantage chauffées jusqu'à une quatrième température supérieure à la troisième température pour produire des eaux usées pressurisées/chauffées sans faire bouillir les eaux usées à travers des surfaces de transfert thermique ; et
un évaporateur (15) destiné à fonctionner à une troisième pression inférieure à la deuxième pression, pour retirer des solides dissous des eaux usées pressurisées/chauffées par évaporation provoquée par une dépressurisation des eaux usées pour produire de la vapeur et de la saumure, dans lequel la saumure a une teneur totale en solides dissous supérieure à une teneur totale en solides dissous des eaux usées reçues,
dans lequel le système de traitement d'eaux usées est configuré de telle sorte que de la vapeur provenant de l'évaporateur est surchauffée jusqu'à une cinquième température supérieure à la quatrième température et configuré de telle sorte que ladite vapeur peut être utilisée comme source de chaleur par au moins l'un du dispositif de chauffage (14), du condenseur (13) et des premier et/ou second dispositifs de préchauffage (12, 12a) sans faire bouillir les eaux usées à travers des surfaces de transfert thermique ;
dans lequel la saumure a une teneur totale en solides dissous supérieure à une teneur totale en solides dissous des eaux usées reçues,
un cristalliseur comprenant un vitrificateur pour cristalliser la saumure afin de produire une masse solide de produit et vapeur usés, dans lequel la masse solide comprend un verre vitrifié des sels dans la saumure,
dans lequel le cristalliseur comprend un cristalliseur à plasma et comprend une torche à plasma pour vaporiser l'eau depuis la saumure et pour produire la masse solide de produit et vapeur usés,
le système comprenant en outre un extracteur pour recevoir initialement les eaux usées et pour retirer des composés organiques volatils des eaux usées avant que les eaux usées ne soient pressurisées par la pompe, dans lequel le système est configuré de telle sorte que les composés organiques volatils retirés sont utilisés comme source de chaleur source par la torche à plasma pour cristalliser la saumure.

2. Système selon la revendication 1, dans lequel la pompe, les premier et second dispositifs de préchauffage, le condenseur, le dispositifs de chauffage et l'évaporateur comprennent un étage, et dans lequel le système comprend de multiples étages, la saumure délivrée en sortie par un étage étant utilisée comme eaux usées reçues d'un étage suivant.

3. Système selon la revendication 1, dans lequel le système est configuré de telle sorte que de la vapeur provenant du cristalliseur est mélangée avec de la vapeur provenant de l'évaporateur et surchauffée jusqu'à la cinquième température, dans lequel la vapeur mélangée et surchauffée est utilisée comme source de chaleur par au moins l'un du dispositif de chauffage, du condenseur et du second dispositif de préchauffage.

4. Système selon la revendication 1, dans lequel le système est configuré de telle sorte que la vapeur produite par l'évaporateur est utilisée comme source de chaleur par l'extracteur.

5. Système selon la revendication 1, dans lequel le système est configuré de telle sorte que la vapeur produite par l'évaporateur est utilisée comme source de chaleur par le premier dispositif de préchauffage.

6. Système selon la revendication 1, dans lequel la pompe (11), les premier et second dispositifs de préchauffage (12, 12a), le condenseur (13), le dispositif de chauffage (14) et l'évaporateur (15) comprennent un étage, et dans lequel le système comprend de multiples étages fonctionnant en parallèle, chacun recevant une partie des eaux usées.

7. Système selon la revendication 1, dans lequel la pompe (11), les premier et second dispositifs de préchauffage (12, 12a), le condenseur (13), le dispositif de chauffage (14) et l'évaporateur (15) comprennent un étage, dans lequel le système comprend de multiples étages, la saumure délivrée en sortie par un étage étant utilisée comme eaux usées reçues d'un étage suivant, et dans lequel le système est configuré de telle sorte que les eaux usées reçues aux étages postérieurs à un premier étage sont à une troisième pression inférieure à la première pression.

8. Procédé de traitement des eaux usées comprenant les étapes consistant à :
(a) recevoir des eaux usées à une première pression et une première température dans une pompe (11), les eaux usées comprenant des solides dissous, des composés organiques volatils et d'autres composants de manière générale et collective appelés impuretés ;
(b) pressuriser les eaux usées reçues jusqu'à une deuxième pression supérieure à la première pression ;
(c) préchauffer les eaux usées pressurisées jusqu'à une deuxième température supérieure à la première température, dans lequel ladite étape de préchauffage est effectuée par des premier et second dispositifs de préchauffage (12, 12a) dans des étages successifs pour produire des eaux usées pressurisées/préchauffées, chacun des premier et second dispositifs de préchauffage (12, 12a) produisant de l'eau distillée sans faire bouillir les eaux usées à travers des surfaces de transfert thermique ;
(d) chauffer les eaux usées pressurisées/préchauffées dans un condenseur (13) jusqu'à une troisième température supérieure à la deuxième température pour produire des eaux usées pressurisées/chauffées sans faire bouillir les eaux usées à travers des surfaces de transfert thermique ;
(e) chauffer davantage les eaux usées pressurisées/chauffées jusqu'à une quatrième température supérieure à la troisième température pour produire des eaux usées pressurisées/davantage chauffées sans faire bouillir les eaux usées à travers des surfaces de transfert thermique ;
(f) retirer, par évaporation provoquée par une dépressurisation des eaux usées, des solides dissous des eaux usées pressurisées/davantage chauffées par un évaporateur (15) fonctionnant à une troisième pression inférieure à la deuxième pression pour produire de la vapeur et de la saumure, dans lequel la saumure a une teneur totale en solides dissous supérieure à une teneur totale en solides dissous des eaux usées reçues, dans lequel de la vapeur provenant de l'évaporateur (15) est surchauffée jusqu'à une cinquième température supérieure à la quatrième température et est utilisée comme source de chaleur dans au moins une des étapes (c) - par le second dispositif de préchauffage (12), (d) et (e) sans faire bouillir les eaux usées à travers des surfaces de transfert thermique ;
(g) cristalliser et vitrifier la saumure pour produire une masse solide de produit et vapeur usés par un cristalliseur et un vitrificateur, dans lequel de la vapeur produite par l'étape (g) est mélangée avec de la vapeur produite par l'étape (f) et surchauffée jusqu'à la cinquième température, dans lequel la vapeur mélangée et surchauffée est utilisée comme source de chaleur dans au moins une des étapes (c) - par le second dispositif de préchauffage (12, 12a), (d) et (e) sans faire bouillir les eaux usées à travers des surfaces de transfert thermique, et dans lequel la masse solide comprend un verre vitrifié des sels dans la saumure ;
dans lequel l'étape (g) utilise une torche à plasma pour cristalliser la saumure, et
dans lequel le procédé comprend en outre les étapes consistant à :
(b') avant l'étape (b), retirer les composés organiques volatils des eaux usées reçues, les composés organiques volatils retirés étant utilisés comme source de chaleur par la torche à plasma pour cristalliser la saumure ;
dans lequel la deuxième pression est d'approximativement 827,4 à 1241,1 kPa (120 à 180 psia), et la troisième pression est d'approximativement 27,6 à 41,4 kPa (4 à 6 psia) ; ou
dans lequel la quatrième température est d'approximativement 141,1 à 221,1°C (286 à 430°F), et dans lequel la première température est d'approximativement 204,4 à 315,6°C (400 à 600°F).

9. Procédé selon la revendication 8, dans lequel les étapes (a) à (f) comprennent un étage, et dans lequel le procédé est effectué dans de multiples étages, la saumure délivrée en sortie par l'étape (f) dans un étage étant utilisée comme eaux usées reçues à l'étape (a) d'un étage suivant.

10. Procédé selon la revendication 9, dans lequel la saumure délivrée en sortie à l'étape (f) de chaque étage a une teneur totale en solides dissous qui est supérieure à celle d'un étage précédent.

11. Procédé selon la revendication 8, dans lequel la vapeur produite par l'étape (f) est utilisée comme source de chaleur à l'étape (b').

12. Procédé selon la revendication 8, dans lequel la vapeur produite par l'étape (f) est utilisée comme source de chaleur à l'étape (c) - par le premier dispositif de préchauffage (12, 12a).

13. Procédé selon la revendication 8, dans lequel les étapes (a) à (f) comprennent un étage, et dans lequel le procédé est effectué dans de multiples étages fonctionnant en parallèle, chaque étage recevant une partie des eaux usées.

14. Procédé selon la revendication 8, dans lequel la saumure délivrée en sortie à l'étape (f) de chaque étage est combinée et fournie à un cristalliseur qui cristallise la saumure combinée pour produire une masse solide de produit et vapeur usés.

15. Procédé selon la revendication 8, dans lequel les étapes (a) à (f) comprennent un étage, et dans lequel le procédé est effectué dans de multiples étages, la saumure délivrée en sortie par l'étape (f) dans un étage étant utilisée comme eaux usées reçues à l'étape (a) d'un étage suivant, et dans lequel les eaux usées reçues à l'étape (a) dans des étages postérieurs à un premier étage sont à une troisième pression inférieure à la première pression.
